# EUROPEAN PATENT SPECIFICATION

(11) **EP 2 699 214 B1**
(45) Date of publication and mention of the grant of the patent: **03.02.2016**
(21) Application number: 12774508.1
(22) Date of filing: 18.04.2012
(51) Int. Cl.: A61G 5/00, B62D 6/00

(54) **STEERING CONTROL SYSTEM AND METHOD FOR MANUAL WHEELCHAIRS**
LENKSTEUERUNGSSYSTEM UND -VERFAHREN FÜR MANUELLE ROLLSTÜHLE
SYSTÈME ET PROCÉDÉ DE DIRECTION ET DE COMMANDE POUR FAUTEUILS ROULANTS MANUELS

(30) Priority: 20.04.2011 NZ 59238111
(43) Date of publication of application: 26.02.2014
(73) Proprietor: Dynamic Controls, Christchurch (NZ)
(72) Inventor: PALMER, Ian, Christchurch (NZ); PETTIGREW, Warren Gordon, Halswell Christchurch 8025 (NZ)
(74) Representative: Carpmaels & Ransford LLP
(86) International application number: PCT/NZ2012/000054
(87) International publication number: WO 2012/144911

(56) References cited:
- JP-A- 2001 286 510
- US-A- 3 639 705
- US-A- 5 016 720
- US-A- 5 050 695
- US-A- 5 135 063
- US-A- 5 651 422
- US-A- 5 826 670
- US-A1- 2002 011 361
- US-A1- 2004 000 440
- US-B2- 8 230 896

## Description

### FIELD OF THE INVENTION

The present invention relates to a steering control system and method for manual wheelchairs. In particular, the present invention relates to a steering control system and method for manual wheelchairs that controls the steering direction of at least one wheel of the wheelchair. A steering system is disclosed in the US 20020011361.

### BACKGROUND

Manual wheelchairs are particularly difficult to propel in a straight line along a surface that has a camber. This is especially true where the wheelchair is set up with its weight forward to improve stability and safety. The difficulty to propel occurs because front mounted castors provide no lateral stability. On cambers a wheelchair will naturally tend to pivot about the vertical axis of its rear axles and via down the camber.

In order to correct this motion the user must apply braking to the uppermost wheel and extra drive to the lower wheel to maintain direction and speed. This is very energy wasteful and strength sapping and can eventually be injurious to health through over-use of the shoulders and arms.

Additionally, many wheelchair users have much more strength on one side of their body compared with the other. This can impair straight-line travel even on flat surfaces. For example, a hemiplegic can only use a manual wheelchair by kick steering or in conjunction with some form of assistive steering device.

On smooth flat surfaces, steering is achieved by applying extra thrust to one wheel and braking effort on the other. This is again energy wasteful.

Manual wheelchairs do not provide the ability of the user to easily steer around objects without either braking or drive effort. A further disadvantage occurs when down-hill steering which, if being directed in a straight line is effortless but, if on a camber requires the user to brake and control the speed of the wheelchair using both side wheels and therefore both hands resulting in excessive energy usage. Commonly, long-term manual wheelchair users suffer from chronic wrist, arm and shoulder injury which can eventually prevent them from using manual wheelchairs and so forcing them to move to power chairs. By doing so, these users lose a degree of independence as well as the health benefits of exercise. The general health of the user then suffers.

Although there are numerous patents that describe mechanical hand-operated steering devices for manual wheelchairs such as, US422620, US479407, US986723 and EP1627619, none of these provide an electromechanical means of controlling the steering. Further, each requires the user to steer the wheelchair while at the same time propelling the wheelchair forward.

Manual wheelchairs are controlled entirely by the user applying power, including power for traction and steering. Aspects of the present invention still enable users to have full traction control but also provide improved steering control when the user requires it.

An object of the present invention is to provide an improved steering mechanism for manually operated wheelchairs or to at least providing the public with a useful choice.

The present invention aims to overcome, or at least alleviate, some or all of the afore-mentioned problems.

The background discussion (including any potential prior art) is not to be taken as an admission of the common general knowledge.

### SUMMARY OF THE INVENTION

It is acknowledged that the terms "comprise", "comprises" and "comprising" may, under varying jurisdictions, be attributed with either an exclusive or an inclusive meaning. For the purpose of this specification, and unless otherwise noted, these terms are intended to have an inclusive meaning - i.e. they will be taken to mean an inclusion of the listed components that the use directly references, but optionally also the inclusion of other non-specified components or elements.

The present invention provides a system and method that enables a user to more effectively control the steering of a manually operated wheelchair without significantly distracting the user from propelling the wheelchair.

According to one aspect, the present invention provides an electromechanical steering system for attachment to a manually operated wheelchair, the electromechanical steering system comprising: an input device arranged to develop at least one input signal, a motor, a gyroscopic device arranged to develop a vertical axis rotational signal, a control module arranged to develop a control signal for driving the motor, where the control signal is based on the at least one input signal and the vertical axis rotational signal, and a wheel steering system driven by the motor and arranged to communicate with a wheel of the manually operated wheelchair to adjust a steering direction of the wheel based on the control signal.

According to a further aspect, the present invention provides a method of controlling a manually operated wheelchair, the method comprising the steps of: developing at least one input signal from an input device, developing a vertical axis rotational signal from a gyroscopic device, developing a control signal for driving a motor, where the control signal is based on the at least one input signal and the vertical axis rotational signal, and driving a wheel steering system using a motor, wherein the wheel steering system is arranged to communicate with a wheel of the manually operated wheelchair to adjust a steering direction of the wheel based on the control signal.

According to particular embodiments of the present invention a benefit is provided wherein the user is able to more easily steer around objects without either braking or providing an increased drive effort. This benefit may also extend to down-hill steering which according to particular embodiments may be completely effortless while the user controls speed by braking with one hand.

According to particular embodiments of the present invention wheelchair motion becomes much more efficient, which can lower strain on the user and may considerably reduce the likelihood of chronic injury.

### BRIEF DESCRIPTION OF THE DRAWINGS

Embodiments of the present invention will now be described, by way of example only, with reference to the accompanying drawings, in which:
**Figure 1** shows a schematic diagram of a device and various components according to an embodiment of the present invention;
**Figure 2** shows a schematic diagram of a device and various components according to a further embodiment of the present invention;
**Figure 3** shows a control system according to an embodiment of the present invention;
**Figure 4** shows a schematic diagram of a device and various components according to yet a further embodiment of the present invention;
**Figure 5** shows a plan view of a wheelchair according to an embodiment of the present invention;
**Figure 6** shows a view of a wheelchair travelling on a camber according to an embodiment of the present invention;
**Figure 7** shows an indication of the travel path of a wheelchair according to an embodiment of the present invention;

### DETAILED DESCRIPTION OF THE INVENTION

Manually operated wheelchairs usually include two caster wheels that are either located towards the front or rear of the wheelchair. Although it is not usual, it is also envisaged that a wheelchair may include one or more than two caster wheels. Embodiments of the present invention may be applied to one or more caster wheels of a manually operated wheelchair.

Further, manually operated wheelchairs include a seated portion in which the user is seated and two opposing side wheels on either side of the seated portion that the user applies a drive force to in order to propel the wheelchair either in a forwards or backwards direction.

### First Embodiment

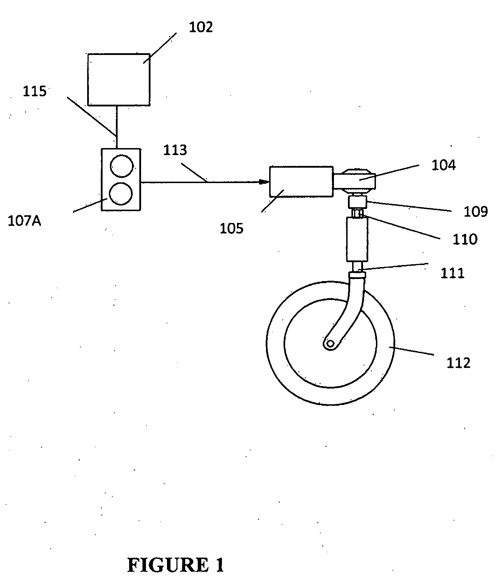

Figure 1 shows a schematic diagram of an electro-mechanical steering system including various components according to a first embodiment. According to figure 1, a caster wheel 112 of a manually operated wheelchair is shown. The caster wheel 112 is connected to the body of the wheelchair via a king pin 111. A drive nut 110 is in communication with the king pin 111 and a drive socket 109 is in communication with the drive nut 110.

On top of the drive socket is located and attached thereto a gearbox 104. Any suitable gearbox may be implemented. For example, the gearbox may be a high ratio worm gearbox. As a further example, the gearbox may be a self locking gearbox that holds its rotational position when the motor is disconnected from the battery or power supply. It will be understood that battery energy consumption may therefore be reduced.

A motor 105 drives the gearbox 104. Therefore, the motor provides a direct drive mechanism for controlling the caster wheel position.

The motor and gearbox are clamped to the wheel chair frame in order to provide anti-rotation. For example, the motor may be mounted on top of the king pin. However, it will be understood that alternative mountings with actuations through links is also possible.

A power source 102, such as a battery, provides power 115 to an input device 107A, which according to this embodiment is a switch cluster. The switch cluster 107A provides one or more power signals (input signals) for the motor 105.

The input device according to this embodiment is mounted on the motor assembly. However, it will be understood that, as an alternative, it may be remotely mounted in any position convenient to the user. As a further alternative, the input device may be mounted on the user's hand, such as on the finger of the user or in a glove.

It will be further understood that any communication between various modules or elements of the present invention may be via a wired or wireless medium. For example, it will be understood that communication from the remotely mounted inputs could be via a wired connection or any suitable wireless link, such as Bluetooth, Infra Red etc.

The switch cluster according to this embodiment includes two switches. A first switch, upon depression, develops a first power signal that drives the motor in a first direction (e.g. it drives the axle of the motor in a clockwise direction). A second switch, upon depression, develops a second power signal that drives the motor in a second direction opposite to the first direction (e.g. it drives the axle of the motor in an anti-clockwise direction).

According to this embodiment, the switches apply power and drive the motor while the switches are being depressed. When the switches are released, the power is removed from the motor and the rotation of the motor ceases. If the user selects both switches, the switch output is set up so that the motor is not driven (i.e. no power signal is provided to the motor).

As an alternative, it will be understood that a forced centre command may be initiated upon a user pressing both switches substantially at the same time. For example, the controller may determine if both switches are initiated at the same time for a predefined period of time and based on this detection, develop a centre command signal to force the motor to move the caster wheel to a central position.

The operator or user of the wheelchair may therefore select one of the two switches in order to drive the motor in one of two directions. Upon the motor being driven the axe in communication with the gearbox provides a rotational driving force to the drive socket and drive nut that causes the king pin and caster wheel to rotate. Therefore, upon a first switch being selected, the caster wheel rotates in a first direction (e.g. clockwise), and upon a second switch being selected, the caster wheel rotates in a second direction (e.g. counter-clockwise).

By changing the direction of the caster wheel, the steering direction of the wheelchair is changed.

It will be understood that the motor, gearbox and connections to the caster wheel described may be duplicated for each caster wheel on the wheelchair and that a single selection of one of the switches may drive one or more caster wheels in a similar manner.

Therefore, according to this embodiment a user is able to manually drive or propel the wheelchair in a desired direction, and then adjust the steering direction of the chair using the herein described electro-mechanical system when required, for example when the chair is travelling upon a camber or an uneven surface.

Since light weight is important, battery size becomes important necessitating the optimization of battery current consumption. Current consumption may be significantly reduced if small dead-bands are introduced into the position feedback system allowing motor current to go to zero if position error is negligible. Therefore, the control system may operate to reduce motor current to zero upon a determination that the error rate is within a predetermined range or limit.

### Second Embodiment

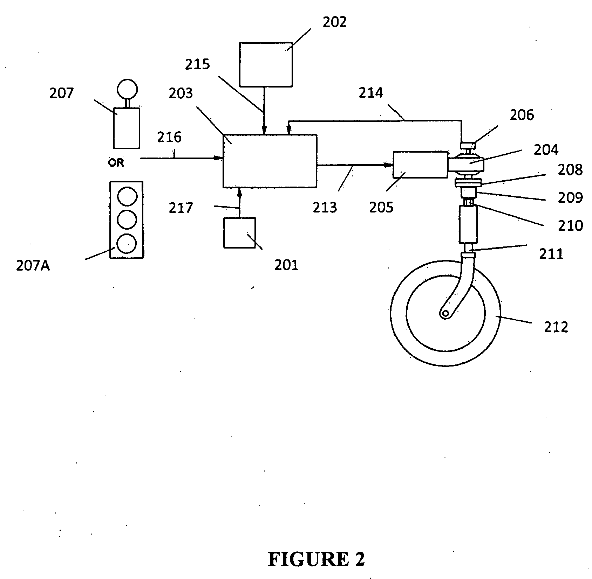

Figure 2 shows a schematic diagram of an electro-mechanical steering system according to this second embodiment.

As described above in the first embodiment a similar arrangement of a caster wheel 212, king pin 211, drive nut 210 and drive socket 209 are provided along with a motor 205 and gearbox 204.

According to this embodiment, a clutch mechanism 208 is provided in between the gearbox 204 and drive socket 209. The clutch enables the drive from the motor to be selectively disconnected or disengaged from the caster wheel and so enables the steering control system to be temporarily disengaged from controlling the wheel position. When the clutch is re-engaged, full control of the steering system is then provided. According to this embodiment, the clutch is operated manually by the user in order to connect and disconnect the motor drive from the caster wheel. The clutch may be manually operated by the use of a switch, lever or pedal.

In addition, according to this embodiment, a control module 203 receives input signals 216 from an input device and a steering feedback signal 214 from an angular positional feedback device 206. The control module 203 also produces as an output a control signal 213 to drive the motor 205 based on the received input signals.

The input device according to this embodiment may be a switch cluster 207A or a joystick device 207. It will be understood that the input device may be any other suitable human to machine interface.

The switch cluster may include three switches. The three switches may be arranged so that one switch provides a signal to the control module in order for the control module to drive the motor and cause the wheel to increase turning in a first direction, a second switch provides a signal to the control module in order for the control module to drive the motor (with the control signal 213) and cause the wheel to increase turning in a second direction opposite to the first, and a third switch provides a signal to the control module in order for the control module to drive the motor and cause the wheel to centre. As will be described in more detail below, when causing the wheel to centre, any integrator error within the control module may be set to zero so that the system is reset and can operate with the wheel starting from a calibrated position.

The steering switches may be arranged to increase the angle of steer for as long as they are pressed.

The joystick device 207 is a single axis joystick that provides signals to the control module 203 based on the position in which the joystick is moved by the user. That is, as the joystick is adjusted in a first direction, the control module drives the motor (with the control signal 213) in a direction that causes the caster wheel to be driven in the first direction. Likewise, if the joystick is moved in a second direction (opposite to the first), the control module drives the motor (with the control signal 213) in a direction that causes the caster wheel to be driven in the second direction. The amount of movement of the joystick may control how quickly the motor is driven and so the speed of rotation of the caster wheel.

As an alternative, the joystick may further include a further axis movement for generating a forced centering command signal to force the caster wheel to a central position. Upon the controller detecting that the joystick has been moved along this further axis, the centering command signal may be developed to control the motor and centre the caster wheel.

The joystick may be arranged so that it increases the angle of steer at a rate of increase proportional to its deflection. When the joystick is released, the steer angle may remain at its present angle of steer but may also be liable to modification by the signal received from a gyroscopic device (discussed below).

The angular positional feedback device 206 according to this embodiment is a potentiometer. The potentiometer is connected to the king-pin and detects the amount of rotation of the caster wheel.

A steering feedback signal is developed by the potentiometer and fed back to the control module to enable the control module to determine the current steering position of the caster wheel. The steering feedback signal provides information on the angular rotational position of the wheel. The control module analyses this signal to determine whether the desired steering position (determined either by signals from the input device or by signals from the gyroscope, or a combination of both) has been reached. If the desired steering position hasn't been reached, the control signal from the control module is modified accordingly in order to adjust the wheel position so the desired position is obtained.

The control module 203 receives power 215 from a power module 202, such as a battery.

Further, a gyroscopic device 201 is attached to the electro-mechanical system on the wheelchair in order to develop a vertical axis rotational signal 217 to the control module that is based on the rotational position of the wheelchair. That is, the vertical axis rotational signal is dependent upon the rotation of the gyroscope about its vertical axis, and is proportional to the turn of the gyroscope. As the gyroscope is fixed to the wheelchair, either directly or indirectly, the rotation of the gyroscopic device about its vertical axis provides an indication of the rotation of the manually operated wheelchair about its vertical axis.

Alternatively, it will be understood that the output of the gyroscope may be proportional to the rate of turn of the gyroscope where the rate of turn provides an indication of the rate of turn of the manually operated wheelchair.

It will be understood that the user may over-ride the steering command from the gyroscope in order to steer the chair in their desired direction without the steering being automatically corrected. For example, an additional input signal may be fed to the control module from an input device to override the gyroscopic device.

An example of suitable user input commands may be one or more of a left steer command, right steer command and centre steer command. For example, a user may operate one of three buttons, where each button is directed to one of the input commands. Alternatively, a joystick may be used to enable the user to input the command by way of moving the joystick left, right or keeping it straight. It will be understood that the input commands may be generated using any other suitable input device. In each case the appropriate output signal is generated by the control module based on the generated input signal, where the output signal drives the motor in the direction as requested by the user to cause the steering to go to the left, to the right or to straighten up.

As an alternative, the gyroscopic device may include a yaw or yaw rate sensor and the vertical axis rotational signal may be developed based on the output of the yaw or yaw rate sensor.

Where the gyroscopic device includes a yaw rate sensor, this enables straighter tracking of the wheelchair when travelling on uneven surfaces or where/when the steered castor wheel slips/skids. A gyroscope is designed to give a signal output that is proportional to the rate of turn of the gyroscope. When the gyroscope is mounted on the wheelchair in such an orientation in order to measure yaw and the wheelchair travelled in a straight line the gyroscope output would be zero. Whereas, if the wheelchair was now to turn (via or yaw), the gyroscope would then develop or produce an output signal which can be used by the control module to correct any via by servo-steering the castor wheel.

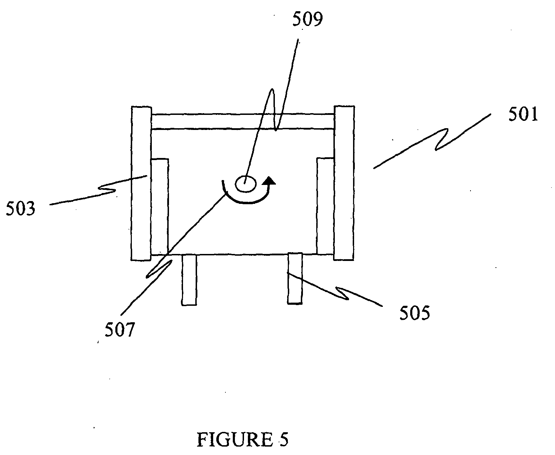

Figure 5 shows a plan view of a wheelchair 501 that includes two main drive wheels 503 that are rotated by the user to propel the wheelchair The caster wheels 505 on this chair are located towards the front. A rotation 507 substantially about a central vertical axis 509 of the wheelchair may be detected by the gyroscopic device.

The control module uses the vertical axis rotational signal to modify the control signal fed to the motor in order to adjusting the wheel steering system and the final position of the caster wheel. This enables the wheel steering system to be adjusted so the manually operated wheelchair travels in a straight line on uneven surfaces with or without single sided tractive effort, e.g. when the user is only applying a driving force or exerting traction to the wheelchair via one side of the chair.

Therefore, the geared motor forms the basis of a servo steering system with the addition of an angular rotation feedback device and a vertical axis rotational feedback device. The control module (servo controller) provides the controlled power to the motor to assure that the output shaft and drive nut steers the castor wheel to a position dictated by user steering commands and further provides additional automatic control of steering utilising the gyroscopic device.

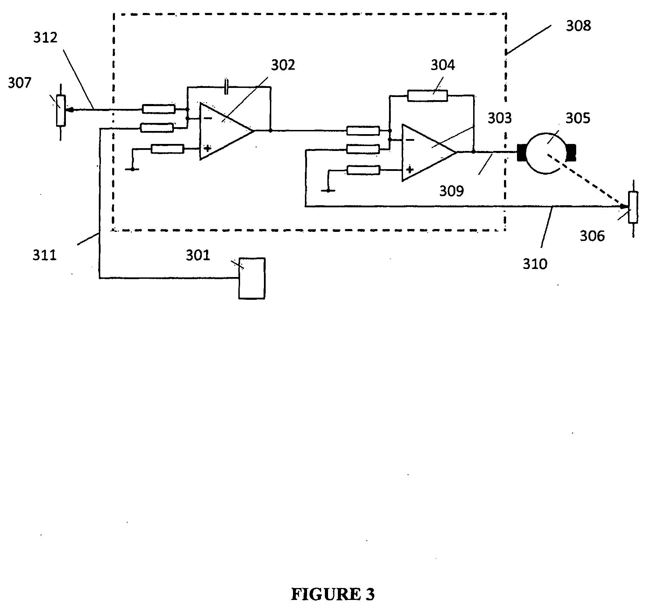

Figure 3 shows a control system for use with the electro-mechanical system according to this embodiment.

The control system includes the control module 308 that receives the input signals 312 from the input device 307, as well as the vertical axis rotational signal 311 from the gyroscopic device 301 and the steering feedback signal 310 from the angular positional feedback device 306. The control module 308 also provides the control signal 309 to the motor 305.

Within the control module is a gyroscopic error integrator 302 that receives a combination of the input signal from the input device and the vertical axis rotational signal from the gyroscope. The output from the gyroscopic error integrator 302 is then fed to a direction amplifier module 303, which in combination with the steering feedback signal input provides the control signal to drive the motor.

It can be seen that the steering feedback signal is fed back to the control module regardless of whether the clutch is engaged or disengaged. Therefore, this enables the control module to monitor the rotational position of the caster wheel so that the control module can ensure the caster wheel is returned to the correct reference angle upon re-engagement of the clutch. For example, the user may wish to disengage the clutch for a tight manoeuvre, and then reengage it after completing the manoeuvre. By tracking the rotational position of the caster wheel during disengagement, the system ensures that accurate control of the wheel position is resumed upon reengagement of the clutch.

With the inclusion of the automatic steering control due to the gyroscopic device, the user is not required to steer the wheelchair when travelling upon a camber as the gyroscope will automatically make the necessary adjustments. If the user wishes to apply additional steering commands they can do so via the input device.

Therefore, the design of the steering algorithm is such that continuous steering commands are unnecessary. It will be understood that, as an alternative, additional sensors may be incorporated to further automate steering.

### Third Embodiment

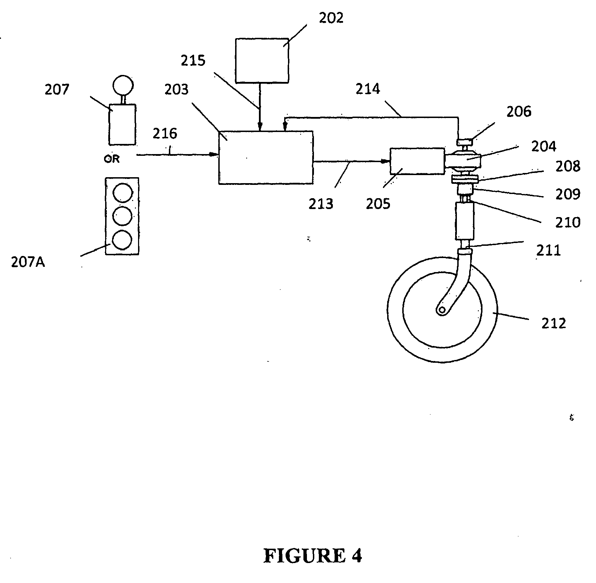

Figure 4 shows a schematic diagram of an electro-mechanical steering device according to a third embodiment. The same reference numerals as shown in figure 2 are shown in this figure where they apply to the same component or signal.

According to this embodiment, the same system as described in the second embodiment is used except that the system does not incorporate a gyroscopic device to provide a vertical axis rotational signal. Therefore, the system is not able to automatically steer the device without receiving user input, but it is still able to monitor the actual position of the caster wheel via the steering feedback signal from the angular feedback device.

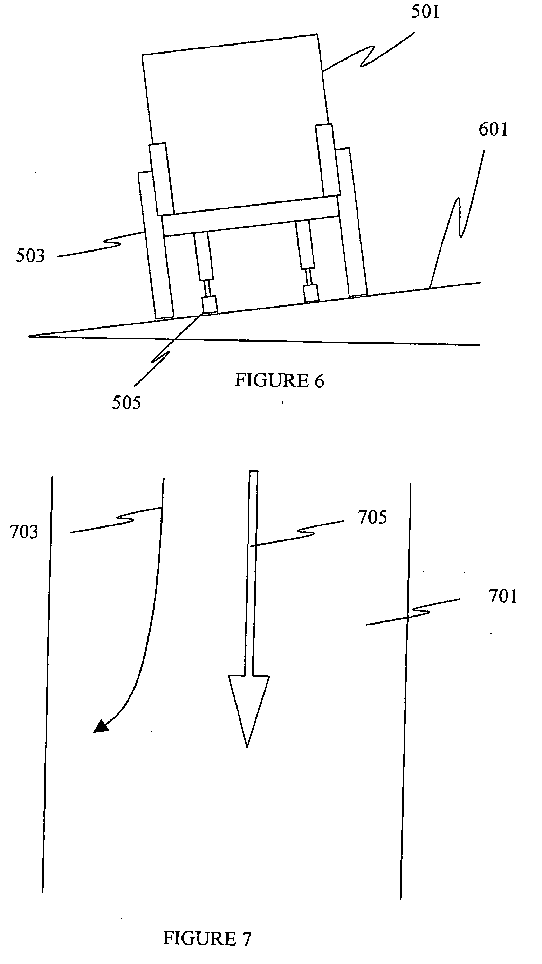

In order to provide an indication of the problem associated with manual wheelchairs travelling on a camber, figure 6 shows a view of a wheelchair travelling on a camber 601.

Figure 7 shows an indication of the travel path of the wheelchair along a surface 701 when there is no adjustment of steer 703, and where there is an adjustment of steer 705 whether by automatic steer control via the gyroscope or by manual control of steer from the user via the input device.

Therefore, embodiments of the present invention provide an active steering device for attaching to a castor wheel on a manually propelled wheelchair with the intention of: stabilizing the chair on uneven surfaces, assist tracking for users with unequal arm strength and to reduce wrist, arm and shoulder strain by improvement in traction efficiency. Further, additional straight-line stability can be realized by incorporating yaw rate sensors. The human to machine input device allows trimming of direction or steering.

The system may incorporate a clutch that can be disengaged to allow the free rotation of the castor wheel for manoeuvring and reversing. The clutch may be electrically and/or mechanically operated. For example, the clutch may be disengaged by the operator lifting the motor assembly to free it from engagement with the clutch.

Further, in order to save battery power, the clutch energising power may be modulated depending on the operating conditions of the steering system. For example, the modulation may be dependent on the difference between the desired rotational angle and the actual angle of the caster wheel as determined by the input signal, steering feedback signal and optionally the vertical axis rotational signal.

Embodiments of the present invention do not add traction power to the wheelchair; they allow a considerable improvement in locomotion efficiency by enabling the user, the system or a combination thereof to actively steer one or more castor wheels of the wheelchair.

### Further Embodiments

It will be understood that the embodiments of the present invention described herein are by way of example only, and that various changes and modifications may be made without departing from the scope of invention.

It will be understood that manual control of the input device to steer the wheelchair may be performed by the user of the wheelchair, i.e. the person actually seated in the wheelchair, or alternatively may be performed by a person operating the wheelchair, such as someone pushing the wheelchair from behind.

It will further be understood that in order to improve resistance to under-steer with a single castor steering system, the height of the steered castor-wheel may be adjusted by spacing the wheel downwards to increase the weight on that wheel. That is, the steered wheel may be positioned lower than any non-steered wheels.

It will further be understood that compliance or contact pressure on uneven surfaces could be improved by adding a suspension spring to the driven castor wheel.

It will be further understood that a geared motor with a self locking gearbox may be used with at least two directional switches to control the rotational position of the one or more caster wheels. A first directional switch may control a first rotational direction and a second directional switch may control a second opposing rotational direction. Movement of the motor in one of the rotational directions may be initiated by detection of the operation of one of the switches. Therefore, with the self locking gearbox the position of the caster wheel is held when power to the motor is not being supplied.

It will further be understood that, in order to protect the gearbox from overload damage, a slipping device such as an overload clutch could be additionally included in the device. It will be understood that the overload clutch and the disconnect clutch could be one in the same device.

## Claims

1. An electromechanical steering system for attachment to a manually operated wheelchair, the electromechanical steering system comprising:
an input device (207A, 307) arranged to develop at least one input signal (216,312),
a motor (205, 305),
a gyroscopic device (201, 301) arranged to develop a vertical axis rotational signal (217, 311),
a control module (203, 308) arranged to develop a control signal (213, 309) for driving the motor (205, 305), where the control signal (213, 309) is based on the at least one input signal (216, 312) and the vertical axis rotational signal (217, 311), and
a wheel steering system driven by the motor (205, 305) and arranged to communicate with a wheel of the manually operated wheelchair to adjust a steering direction of the wheel based on the control signal (213, 309).

2. The electromechanical steering system of claim 1, wherein the control signal (213, 309) is based on one or more further signals.

3. The electromechanical steering system of claim 1 or claim 2, wherein the control module (203, 308) uses the vertical axis rotational signal (217, 311) to modify the control signal (213, 309) fed to the motor (205, 305) for adjusting the wheel steering system.

4. The electromechanical steering system of claim 3, wherein the wheel steering system is adjusted so that the manually operated wheelchair travels in a straight line on uneven surfaces with or without single sided tractive effort.

5. The electromechanical steering system of any one of the preceding claims further comprising a steering feedback device (206, 306) arranged to develop a steering feedback signal (214, 310) based on the position of the wheel, wherein the control signal (213, 309) is based at least on the steering feedback signal (214,310).

6. The electromechanical steering system of claim 5, wherein the steering feedback signal (214, 310) is analysed by the control module (203, 308) to determine if a desired steering position of the wheel has been reached and to modify the control signal (213, 309) fed to the motor (205, 305) based on the determination.

7. The electromechanical steering system of claim 6, wherein the desired chair direction is determined by a vertical axis rotational signal (217, 311) received from a gyroscopic device (201, 301).

8. The electromechanical steering system of any one of the preceding claims, wherein the wheel steering system further comprises a clutch (208).

9. The electromechanical steering system of claim 8, wherein the clutch (208) may be disengaged by moving the motor assembly to free the motor (205) from engagement with the clutch (208).

10. The electromechanical steering system of any one of the preceding claims, wherein the input device is a joystick (207).

11. The electromechanical steering system of claim 10, wherein movement of the joystick (207) determines the direction in which the motor (205) drives the wheel of the manually operated wheelchair.

12. The electromechanical steering system of claim 10, wherein movement of the joystick (207) increases an angle of steer at a rate of increase that is proportional to the movement.

13. The electromechanical steering system of any one of claims 1 to 9, wherein the input device (207A, 307) comprises one or more switches.

14. The electromechanical steering system of claim 13, wherein the length of depression of the one or more switches determines the amount the steering is adjusted.

15. The electromechanical steering system of claim 13 or claim 14 wherein the input device (207A, 307) comprises three switches, a first switch to steer left, a second switch to steer right and a third switch to reset the steering to a central position.

16. The electromechanical steering system of claim 1, wherein, upon resetting the third switch to a central position, a steering error signal is reset.

17. A manually operated wheelchair (501) including one or more castor wheels (505), wherein the electromechanical steering system of any one of the preceding claims is attached to one or more of the castor wheels (505).

## Patentansprüche

1. Elektromechanisches Lenksystem zur Befestigung an einem manuell betriebenen Rollstuhl, wobei das elektromechanische Lenksystem Folgendes umfasst:
eine Eingabevorrichtung (207A, 307), die ausgelegt ist, mindestens ein Eingangssignal (216, 312) zu erstellen,
einen Motor (205, 305),
eine Gyroskopvorrichtung (201, 301), die ausgelegt ist, ein Drehsignal der vertikalen Achse (217, 311) zu erstellen,
ein Steuermodul (203, 308), das ausgelegt ist, ein Steuersignal (213, 309) zum Antreiben des Motors (205, 305) zu erstellen, wobei das Steuersignal (213, 309) auf dem mindestens einen Eingangssignal (216, 312) und dem Drehsignal der vertikalen Achse (217, 311) beruht, und
ein Radlenksystem, das durch den Motor (205, 305) angetrieben wird und ausgelegt ist, mit einem Rad des manuell betriebenen Rollstuhls zu kommunizieren, um eine Lenkrichtung des Rads anhand des Steuersignals (213, 309) anzupassen.

2. Elektromechanisches Lenksystem nach Anspruch 1, wobei das Steuersignal (213, 309) auf einem oder mehreren weiteren Signalen beruht.

3. Elektromechanisches Lenksystem nach Anspruch 1 oder Anspruch 2, wobei das Steuermodul (203, 308) das Drehsignal der vertikalen Achse (217, 311) verwendet, um das Steuersignal (213, 309), das dem Motor (205, 305) zugeführt wird, zu ändern, um das Radlenksystem anzupassen.

4. Elektromechanisches Lenksystem nach Anspruch 3, wobei das Radlenksystem so angepasst wird, dass der manuell betriebene Rollstuhl auf unebenen Fläche mit oder ohne eine einseitige Zugkraft in einer geraden Linie fährt.

5. Elektromechanisches Lenksystem nach einem der vorhergehenden Ansprüche, das ferner eine Lenkrückkopplungsvorrichtung (206, 306) umfasst, die ausgelegt ist, ein Lenkrückkopplungssignal (214, 310) anhand der Position des Rads zu erstellen, wobei das Steuersignal (213, 309) zumindest auf dem Lenkrückkopplungssignal (214, 310) beruht.

6. Elektromechanisches Lenksystem nach Anspruch 5, wobei das Lenkrückkopplungssignal (214, 310) durch das Steuermodul (203, 308) analysiert wird, um zu bestimmen, ob eine gewünschte Lenkposition des Rads erreicht wurde, und das Steuersignal (213, 309), das dem Motor (205, 305) zugeführt wird, anhand der Bestimmung zu ändern.

7. Elektromechanisches Lenksystem nach Anspruch 6, wobei die gewünschte Stuhlrichtung durch ein Drehsignal einer vertikalen Achse (217, 311), das von einer Gyroskopvorrichtung (201, 301) empfangen wird, bestimmt wird.

8. Elektromechanisches Lenksystem nach einem der vorhergehenden Ansprüche, wobei das Radlenksystem ferner eine Kupplung (208) umfasst.

9. Elektromechanisches Lenksystem nach Anspruch 8, wobei die Kupplung (208) durch Bewegen der Motoranordnung ausgekuppelt werden kann, um den Motor (205) aus dem Eingriff mit der Kupplung (208) zu befreien.

10. Elektromechanisches Lenksystem nach einem der vorhergehenden Ansprüche, wobei die Eingabevorrichtung ein Steuerhebel (207) ist.

11. Elektromechanisches Lenksystem nach Anspruch 10, wobei die Bewegung des Steuerhebels (207) die Richtung bestimmt, in die der Motor (205) das Rad des manuell betriebenen Rollstuhls antreibt.

12. Elektromechanisches Lenksystem nach Anspruch 10, wobei die Bewegung des Steuerhebels (207) einen Lenkwinkel mit einer Steigerungsrate erhöht, die proportional zu der Bewegung ist.

13. Elektromechanisches Lenksystem nach einem der Ansprüche 1 bis 9, wobei die Eingabevorrichtung (207A, 307) einen oder mehrere Schalter umfasst.

14. Elektromechanisches Lenksystem nach Anspruch 13, wobei die Länge des Herunterdrückens des einen oder der mehreren Schalter den Betrag bestimmt, um den die Lenkung angepasst wird.

15. Elektromechanisches Lenksystem nach Anspruch 13 oder Anspruch 14, wobei die Eingabevorrichtung (207A, 307) drei Schalter umfasst, einen ersten Schalter, um nach links zu lenken, einen zweiten Schalter, um nach rechts zu lenken, und einen dritten Schalter, um die Lenkung auf eine zentrale Position zurückzusetzen.

16. Elektromechanisches Lenksystem nach Anspruch 1, wobei bei dem Zurücksetzen des dritten Schalters auf eine zentrale Position ein Lenkfehlersignal zurückgesetzt wird.

17. Manuell betriebener Rollstuhl (501), das ein oder mehrere Lenkrollen (505) enthält, wobei das elektromechanische Lenksystem nach einem der vorhergehenden Ansprüche an einer oder mehreren der Lenkrollen (505) befestigt ist.

## Revendications

1. Système de direction électromécanique destiné à être fixé à un fauteuil roulant à commande manuelle, le système de direction électromécanique comprenant :
un dispositif d'entrée (207A, 307) conçu pour développer au moins un signal d'entrée (216, 312), un moteur (205, 305),
un dispositif gyroscopique (201, 301) conçu pour développer un signal rotationnel (217, 311) d'axe vertical,
un module de commande (203, 308) conçu pour développer un signal de commande (213, 309) servant à commander le moteur (205, 305), le signal de commande (213, 309) étant basé sur l'au moins un signal d'entrée (216, 312) et sur le signal rotationnel (217, 311) d'axe vertical, et
un système de changement de direction de roue entraîné par le moteur (205, 305) et conçu pour communiquer avec une roue du fauteuil roulant à commande manuelle afin de régler un sens de changement de direction de la roue en se basant sur le signal de commande (213, 309).

2. Système de direction électromécanique selon la revendication 1, avec lequel le signal de commande (213, 309) est basé sur ou un plusieurs signaux supplémentaires.

3. Système de direction électromécanique selon la revendication 1 ou 2, avec lequel le module de commande (203, 308) utilise le signal rotationnel (217, 311) d'axe vertical pour modifier le signal de commande (213, 309) acheminé au moteur (205, 305) en vue du réglage du système de changement de direction de roue.

4. Système de direction électromécanique selon la revendication 3, avec lequel le système de changement de direction de roue est réglé de telle sorte que le fauteuil roulant à commande manuelle se déplace en ligne droite sur des surfaces irrégulières avec ou sans effort de traction unilatéral.

5. Système de direction électromécanique selon l'une quelconque des revendications précédentes, comprenant en outre un dispositif de rétroaction de direction (206, 306) conçu pour développer un signal de rétroaction de direction (214, 310) basé sur la position de la roue, le signal de commande (213, 309) étant basé au moins sur le signal de rétroaction de direction (214, 310).

6. Système de direction électromécanique selon la revendication 5, avec lequel le signal de rétroaction de direction (214, 310) est analysé par le module de commande (203, 308) pour déterminer si une position de changement de direction souhaitée de la roue a été atteinte et pour modifier le signal de commande (213, 309) acheminé au moteur (205, 305) en se basant sur la détermination.

7. Système de direction électromécanique selon la revendication 6, avec lequel la direction souhaitée du fauteuil est déterminée par un signal rotationnel (217, 311) d'axe vertical reçu de la part d'un dispositif gyroscopique (201, 301).

8. Système de direction électromécanique selon l'une quelconque des revendications précédentes, avec lequel le système de changement de direction de roue comprend en outre un embrayage (208).

9. Système de direction électromécanique selon la revendication 8, avec lequel l'embrayage (208) peut être débrayé en déplaçant le bloc moteur afin de libérer le moteur (205) de sa prise avec l'embrayage (208).

10. Système de direction électromécanique selon l'une quelconque des revendications précédentes, avec lequel le dispositif d'entrée est une manette multidirectionnelle (207).

11. Système de direction électromécanique selon la revendication 10, avec lequel le mouvement de la manette multidirectionnelle (207) détermine la direction dans laquelle le moteur (205) entraîne la roue du fauteuil roulant à commande manuelle.

12. Système de direction électromécanique selon la revendication 10, avec lequel le mouvement de la manette multidirectionnelle (207) augmente un angle de braquage à un taux d'augmentation qui est proportionnel au mouvement.

13. Système de direction électromécanique selon l'une quelconque des revendications 1 à 9, avec lequel le dispositif d'entrée (207A, 307) comprend un ou plusieurs commutateurs.

14. Système de direction électromécanique selon la revendication 13, avec lequel la longueur de l'enfoncement de l'un ou des plusieurs commutateurs détermine la valeur de réglage du changement de direction.

15. Système de direction électromécanique selon la revendication 13 ou 14, avec lequel le dispositif d'entrée (207A, 307) comprend trois commutateurs, un premier commutateur pour changer de direction vers la gauche, un deuxième commutateur pour changer de direction vers la droite et un troisième commutateur pour ramener la direction vers une position centrale.

16. Système de direction électromécanique selon la revendication 1, avec lequel le rétablissement du troisième commutateur vers une position centrale réinitialise un signal d'erreur de changement de direction.

17. Fauteuil roulant à commande manuelle (501) comprenant une ou plusieurs roues orientables (505), le système de direction électromécanique selon l'une quelconque des revendications précédentes étant relié à une ou plusieurs des roues orientables (505).
